**Europäisches Patentamt**

**European Patent Office**

**Office européen des brevets**

(19)

(11) **EP 1 688 809 A1**

(12)

# EUROPEAN PATENT APPLICATION
published in accordance with Art. 158(3) EPC

(43) Veröffentlichungstag:
**09.08.2006 Patentblatt 2006/32**

(21) Anmeldenummer: **04775261.3**

(22) Anmeldetag: **17.08.2004**

(51) Int Cl.:
*G05B 19/418* (2006.01)       *H04L 12/417* (2006.01)

(86) Internationale Anmeldenummer:
**PCT/RU2004/000323**

(87) Internationale Veröffentlichungsnummer:
**WO 2006/022569 (02.03.2006 Gazette 2006/09)**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **Obshschestvo S Ogranichennoy Otveetstvennostiuy "Promishlennaya Gruppa" Finprom - Resurs" Saratov, 410004 (RU)**

(72) Erfinder:
• **ANISIMOV, Valery Evgenyevich Saratov, 410072 (RU)**

• **AVERYANOV, Sergey Petrovich Engels, Saratovskaya obl., 413105 (RU)**
• **ABLAEV, Igor Evgenyevich Saratov, 410600 (RU)**
• **SHTIKOV, Andrey Valentinovich Saratov, 410001 (RU)**

(74) Vertreter: **Jeck, Anton et al Patentanwalt, Klingengasse 2 71665 Vaihingen/Enz (DE)**

(54) **EINRICHTUNG ZUR STEUERUNG EINES SYSTEMS VON OBJEKTEN DURCH EINE STROMVERSORGUNGSLEITUNG UND ADAPTER DAFÜR**

(57) Die Erfindung bezieht sich auf die Fernmeldetechnik, Radiotechnik und Rechentechnik. Die Aufgabe der Erfindung ist die Erhöhung der Qualität der Steuerung. Es wird eine Einrichtung zur Steuerung eines Systems aus Objekten vorgeschlagen, die folgendes aufweist: eine mit einer unabhängigen Stromversorgungsquelle verbundene Kraftleitung, Adapter, die zwischen der Kraftleitung und den Objekten angeschlossen sind und die mit den Objekten Steuerungsglieder bilden und programmierbar mit der Möglichkeit der Synchronisierung des Datenempfangs ausgeführt sind, wobei gemäß der Erfindung die Kraftleitung gleichzeitig zur Datenübertragung dient und die Adapter mit der Möglichkeit der Berücksichtigung von Störungen ausgeführt sind. Der zwischen der Kraftleitung und der unabhängigen Stromversorgungsquelle angeschlossene Adapter ist außerdem mit der Möglichkeit der Synchronisierung der Datenübertragung zwischen den restlichen Adaptern unter Berücksichtigung der Momente der Entstehung der Störungen und der Regelung der Stromversorgungsspannung ausgeführt. Es wird auch ein Adapter dieser Einrichtung vorgeschlagen.

Fig.1

EP 1 688 809 A1

**Beschreibung**

Die Erfindung bezieht sich auf die Fernmeldetechnik, Radiotechnik und Rechentechnik. Sie ist für die Steuerung von Objektsystemen mit unabhängiger Stromversorgung, beispielsweise für die Steuerung eines Fahrzeugs, anwendbar.

In den bekannten Einrichtungen zur Steuerung eines Systems aus mehreren Objekten (SU 460530, 20.06.1975; SU 652527, 15.03.1979; SU 1295369, 07.03.1987; WO 97/19393, 29.05.1997) entsteht die Notwendigkeit der Realisierung einer großen Anzahl von Steuergliedern, die diese Objekte über Regler verbinden. Dabei entsteht ein kompliziertes, verzweigtes, sich mit der Zeit änderndes System der Verbindung der Objekte mit den Reglern und der Regler untereinander. Die große Anzahl der physischen Verbindungen (beispielsweise Übertragungsleitungen oder - frequenzbereiche) führt zu einem erheblichen Störpegel und zu einer ernsthaften Komplexität bei der physischen Realisierung des Steuersystems. Dadurch wird die Qualität der Steuerung verringert. Außerdem reduziert sich die Zuverlässigkeit der Steuersysteme und deren Anpassungsfähigkeit an das konkrete Objekt und an die Veränderung der Funktionen sowohl des Objekts als auch des Systems insgesamt wesentlich.

Es sind auch Einrichtungen bekannt (RU 2138120, 20.09.1999; DE 19621384, 28.11.1996; DE 19838469, 02.03.2000; RU 2178952, 27.01.2002; EP 0754990, 22.01.1997), die für die Realisierung der Steuerung von mehreren Objekten ein anderes Prinzip der Verbindung benutzen, das so genannte Kanalprinzip. Anstelle eines verzweigten Netzes wird in den Einrichtungen eine beschränkte Anzahl von Verbindungskanälen mit einer konsequenten Übertragung der Information verwendet. Die Realisierung des Kanalverfahrens zur Verbindung der Regler, der Sensoren und der Stellorgane des Objekts unter Beibehaltung des Prinzips der unabhängigen Steuerung der Objekte zwingt dazu, große Übertragungsgeschwindigkeiten der Steuerinformation über den Verbindungskanal zu verwenden. Dies ist durch die Forderung bedingt, einen kleinen Schritt der zeitlichen Quantisierung der Information zwecks Sicherung der Qualität der Regelung zu gewährleisten. Die Vergrößerung der Anzahl der Objekte und der Regelungsglieder vergrößert die Auslastung des Kanals mit synchronisierenden Daten und Dienstdaten, deren maximaler Umfang bei einer minimalen Abhängigkeit der Prozesse erreicht wird, die von den am Kanal angeschlossenen Einrichtungen realisiert werden. Dabei wird die Nutzgeschwindigkeit der Übertragung der Steuerdaten bei der festgelegten Übertragungsgeschwindigkeit herabgesetzt. Die Sicherung der Störungsempfindlichkeit des Verbindungskanals verlangt die Vergrößerung der Übertragungsgeschwindigkeiten.

Als nächstes Analogon (Prototyp) der Einrichtung gemäß der Erfindung kann das Steuersystem mit verteilten Prozessen (WO 03/019303, 06.03.2003) betrachtet werden. Das System enthält zu steuernde Objekte, die die Elemente eines Systems ("des verteilten Objekts") sind, Adapter (Kontroller), nämlich Einrichtungen, die die Prozesse in einem der Objekte des Systems softwaremäßig steuern, und "Meister", nämlich eine Einrichtung, die die Steuerung des Datenaustausches zwischen Adaptern gewährleistet. Die Objekte sind untereinander mit dem Verbindungskanal durch Adapter verbunden.

Jeder Adapter enthält eine Verbindungsschnittstelle (kombiniert die Funktionen des Empfängers und des Senders) und einen Schrittkontroller. Der Schrittkontroller erfüllt folgende Funktionen:

- die Zerlegung der übernommenen Informationen entsprechend der Nummer des Prozesses im Objekt,
- die Bearbeitungen der Informationen aus dem Objekt,
- die Übertragung der Informationen nach ihrer Verarbeitung,
- die Regelung des Objekts entsprechend den Informationen, die über den Verbindungskanal entsprechend dem Schritt der Regelung erhalten wurden.

Der Meister synchronisiert die Arbeit der Adapter, indem er die Daten über den Zustand der Prozesse nach den Objekten sammelt und diese nach den Prozessen verteilt, was zur gleichzeitigen Existenz von zwei nicht synchronen Datenströmen im System führt (der Strom der Daten, die von den Objekten übertragen werden, und der Strom der Daten, die nach den Prozessen gruppiert werden).

Die Unmöglichkeit der vollen Synchronisation der Datenströme im Prototyp führt zur Unmöglichkeit der Bildung von standfesten Regelungsgliedern zur Steuerung der Prozesse, die mehr als einen Knoten einschließen, wenn der volle Zyklus des Austausches zeitmäßig mit dem Zyklus der Regelung vergleichbar ist, was "Steuerungslärm" erzeugt. Im Prototyp sind keine Mittel zum Schutz gegen äußere Störungen vorgesehen. Die erwähnten Besonderheiten verringern wesentlich die Qualität der Regelung, was den Anwendungsbereich des Systems auf Medien mit großen Zeitkonstanten einschränkt (die "langsamen" Objekte, nämlich die Museen, die Kinos, die Kinderparks, die chemischen Prozesse usw.).

Die Aufgabe der vorliegenden Erfindung besteht darin, eine Einrichtung der im Oberbegriff des Anspruchs 1 genannten Art anzugeben, bei der die Qualität der Steuerung erhöht ist.

Es wird eine Einrichtung zur Steuerung des Systems von Objekten vorgeschlagen, die folgendes aufweist:

- eine mit einer unabhängigen Stromversorgungsquelle verbundene Kraftleitung,
- Adapter, die zwischen der Kraftleitung und den Objekten angeschlossen sind, die mittels Objekten die Steuerglieder bilden und programmierbar mit der Möglichkeit der Synchronisation des Datenempfangs ausgeführt sind,

und die dadurch gekennzeichnet ist, dass die Kraftleitung gleichzeitig zur Datenübertragung dient und die Adapter mit der Möglichkeit der Berücksichtigung von Störungen ausgeführt sind. Der zwischen der Kraftleitung und der unabhängigen Stromversorgungsquelle angeschlossene Adapter ist außerdem mit der Möglichkeit der Synchronisation der Datenübertragung zwischen den übrigen Adaptern unter Berücksichtigung der Momente der Störungsentstehung und der Regelung der Stromversorgungsspannung ausgeführt.

Es wird auch ein Adapter der genannten Einrichtung vorgeschlagen, der folgendes aufweist: Empfänger, Sender, eine Zerlegungseinheit, Hauptspeicher (RAM), eine Einheit zur Steuerung des Objekts, einen Synchronisator, eine Eingangs-Ausgangs-Einheit und eine Umwandlungseinheit. Die Einheit zur Steuerung des Objekts, die Eingangs-Ausgangs-Einheit und die Umwandlungseinheit sind programmierbar ausgeführt. Der erste Eingang des Empfängers ist für den Anschluss der Kraftleitung vorgesehen. Der erste Ausgang ist am ersten Eingang der Zerlegungseinheit angeschlossen. Der zweite Ausgang ist am ersten Eingang des Synchronisators angeschlossen. Der dritte Ausgang ist am ersten Eingang des Senders angeschlossen. Der zweite Eingang des Senders ist am ersten Ausgang der Zerlegungseinheit angeschlossen. Der dritte Eingang ist am ersten Ausgang des Synchronisators angeschlossen. Der Ausgang ist für den Anschluss an die Kraftleitung vorgesehen. Der zweite Eingang der Zerlegungseinheit ist am ersten Ausgang des Hauptspeichers angeschlossen. Der dritte Eingang ist am zweiten Ausgang des Synchronisators angeschlossen. Der erste Eingang der Einheit zur Steuerung des Objekts ist am vierten Ausgang des Hauptspeichers angeschlossen. Der erste Ausgang ist am vierten Eingang des Hauptspeichers angeschlossen. Der erste Eingang des Hauptspeichers ist am ersten Ausgang der Eingangs-Ausgangs-Einheit angeschlossen. Der zweite Eingang ist am dritten Ausgang des Synchronisators angeschlossen. Der dritte Eingang ist am zweiten Ausgang der Zerlegungseinheit angeschlossen. Der dritte Ausgang ist am ersten Eingang der Eingangs-Ausgangs-Einheit angeschlossen. Der zweite Eingang der Eingangs-Ausgangs-Einheit ist am ersten Ausgang der Umwandlungseinheit angeschlossen. Der zweite Ausgang ist am ersten Eingang der Umwandlungseinheit angeschlossen. Die Umwandlungseinheit hat außerdem Eingänge und Ausgänge für den Anschluss des Objekts. Im Adapter gemäß der Erfindung ist der erste Ausgang der Zerlegungseinheit am zweiten Eingang des Empfängers angeschlossen. Der zweite Eingang des Synchronisators ist am fünften Ausgang des Hauptspeichers angeschlossen. Der dritte Eingang ist am zweiten Ausgang der Einheit zur Steuerung des Objekts angeschlossen.

Der vierte Eingang ist am dritten Ausgang der Eingangs-Ausgangs-Einheit angeschlossen. Der vierte Ausgang ist am zweiten Eingang der Einheit zur Steuerung des Objektes angeschlossen.

Die Erfindung ist durch die Umsetzung einiger Faktoren gekennzeichnet. Als erster Faktor gilt die Organisation des ständigen Direktzugriffs auf die Systeminformation für alle Einheiten zur Steuerung der Objekte bei einer minimalen Anzahl der physischen Verbindungskanäle. Als zweiter Faktor gilt die Reduzierung des eigenen Lärms des Verbindungskanals, der durch die zufällige Streuung der reinen Totzeit bei jeder Komponente der Steuerinformation verursacht wird. Dabei wird die Übertragungsgeschwindigkeit über den physischen Verbindungskanal im Wesentlichen nicht höher, was mittels der adaptiven, zentralisierten Synchronisation des Austausches erreicht wird. Als dritter Faktor gilt die Kürzung des Anteils von Dienstdaten in jeder Sendung (d.h. die Adressierung, die Daten über Länge und Priorität der Sendung usw.); dadurch erhöht sich der Anteil der unmittelbaren Steuerinformationen. Schließlich gilt als vierter Faktor die Sicherung einer hohen Störfestigkeit durch den Ausschluss des größten Teils der Störungen aus dem Prozess der Informationsübertragung bei gleichzeitiger Minimierung des Zeitaufwands für die Umsetzung dieses Prozesses.

Die Erfindung wird nun anhand eines Ausführungsbeispiels näher erläutert, wobei der Aufbau und die Arbeitsweise der Einrichtung gemäß der Erfindung grafisch dargestellt sind. Es zeigen:

Fig. 1    ein Schema einer Einrichtung zur Steuerung eines Systems aus Objekten,

Fig. 2    ein Schema des Anschlusses von Adaptern an die Objekte,

Fig. 3    ein Schema eines Adapters der Einrichtung zur Steuerung des Systems aus Objekten,

Fig. 4    ein grundsätzliches Schema zur Erläuterung der Wirkungsweise der Einrichtung,

Fig. 5    ein Übersichtsschema zur Erläuterung des Vorgangs zur Bildung des Moments der Übergabe einer Aussetzmarkierung der Takte, die die Störungen enthalten,

Fig. 6    ein Zeitdiagramm des Austausches und

Fig. 7    ein Zeitdiagramm von Markierungsansichten.

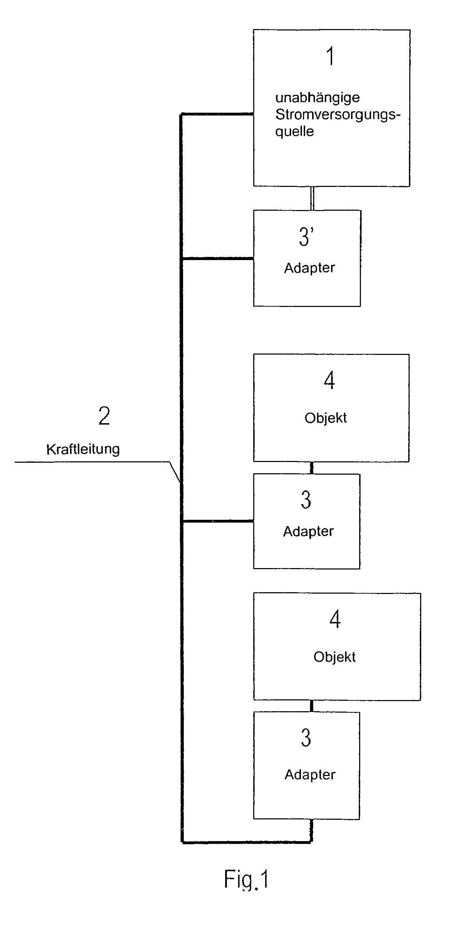

Die Einrichtung zur Steuerung eines Systems aus Objekten (Schema der Fig. 1) enthält eine mit einer unabhängigen Stromversorgungsquelle 1 verbundene Kraftleitung 2, Adapter 3, die zwischen der Kraftleitung 2 und Objekten 4 angeschlossen sind und mit den Objekten 4 Steuerglieder bilden. Die Kraftleitung 2 dient gleichzeitig zur Datenübertragung. Die Adapter 3 sind programmierbar mit der Möglichkeit der Synchronisation des Datenempfangs und der Berücksichtigung von Störungen ausgeführt. Der Adapter 3, der zwischen der Kraftleitung 2 und der unabhängigen Stromversorgungsquelle 1 angeschlossen ist, ist außerdem mit der Möglichkeit der Synchronisierung der Datenübertragung zwischen den übrigen Adaptern unter Berücksichtigung der Momente der Entstehung der Störungen und der Regelung der Spannung der Stromversorgungsquelle 1 ausgeführt.

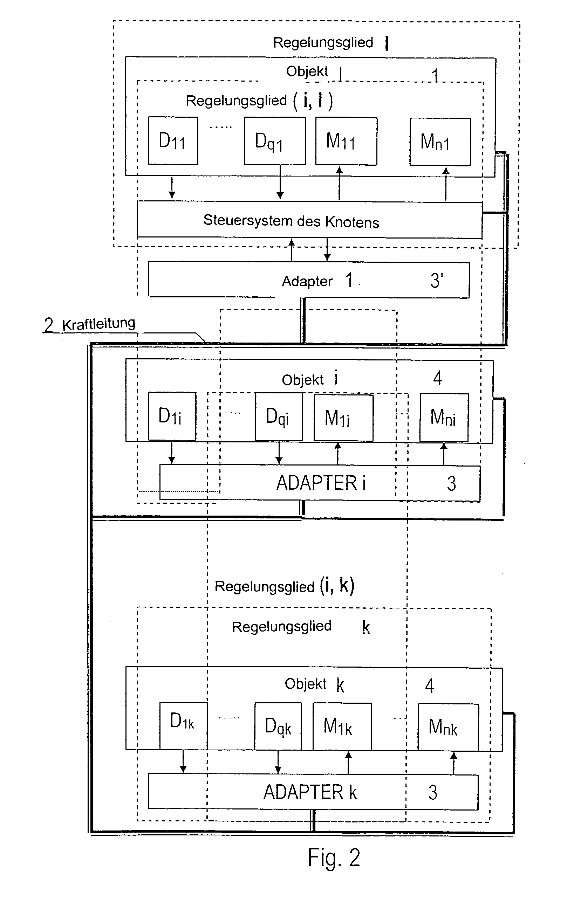

Es werden zwei Varianten des Anschlusses am Objekt (Fig. 2) gewährleistet. Im Fall des Anschlusses am eingebauten System zur Steuerung des Objekts erfüllt der Adapter 3 am Treffpunkt mit dem System zur Steuerung des Objekts die Funktionen eines Imitators der Steuersignale vom Regelungsglied i und die Teilfunktionen der Regler der Regelungsglieder i, 1. Falls die Adapter unmittelbar an den Sensoren und den Stellorganen angeschlossen sind, erfüllen die Adapter i und k die Funktion des Reglers des Objekts k an diesem Treffpunkt und die Teilfunktionen der Regler der Regelungsglieder i, 1.... i, k.

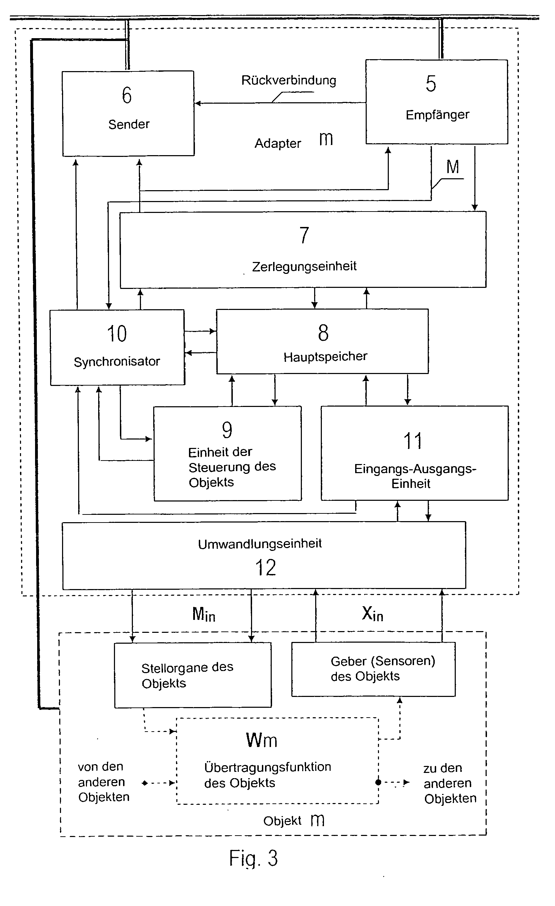

Der Adapter der Einrichtung zur Steuerung des Systems aus Objekten (Schema der Fig. 3) enthält: einen Empfänger 5, einen Sender 6, eine Zerlegungseinheit 7, einen Hauptspeicher 8, eine Einheit 9 zur Steuerung des Objekts, einen Synchronisator 10, eine Eingangs-Ausgangs-Einheit 11 und eine Umwandlungseinheit 12. Die Einheit 9 zur Steuerung des Objekts, die Eingangs-Ausgangs-Einheit 11 und die Umwandlungseinheit 12 sind programmierbar ausgeführt.

Der erste Eingang des Empfängers 5 ist für den Anschluss an die Kraftleitung vorgesehen. Der erste Ausgang ist am ersten Eingang der Zerlegungseinheit 7 angeschlossen. Der zweite Ausgang ist am ersten Eingang des Synchronisators 10 angeschlossen. Der dritte Ausgang ist am ersten Eingang des Senders 6 angeschlossen. Der zweite Eingang des Senders 6 ist am ersten Ausgang der Zerlegungseinheit 7 angeschlossen. Der dritte Eingang ist am ersten Ausgang des Synchronisators 10 angeschlossen, und der Ausgang ist für den Anschluss an der Kraftleitung 2 vorgesehen. Der zweite Eingang der Zerlegungseinheit 7 ist am ersten Ausgang des Hauptspeichers 8 angeschlossen. Der dritte Eingang ist am zweiten Ausgang des Synchronisators 10 angeschlossen. Der erste Ausgang ist am zweiten Eingang des Empfängers 5 angeschlossen. Der erste Eingang der Einheit 9 zur Steuerung des Objektes ist am vierten Ausgang des Hauptspeichers 8 angeschlossen, und der erste Ausgang ist am vierten Eingang des Hauptspeichers 8 angeschlossen. Der erste Eingang des Hauptspeichers 8 ist am ersten Ausgang der Eingangs-Ausgangs-Einheit 11 angeschlossen. Der zweite Eingang ist am dritten Ausgang des Synchronisators 10 angeschlossen. Der dritte Eingang ist am zweiten Ausgang der Zerlegungseinheit 7 angeschlossen. Der dritte Ausgang ist am ersten Eingang der Eingangs-Ausgangs-Einheit 11 angeschlossen. Der zweite Eingang des Synchronisators 10 ist am fünften Ausgang des Hauptspeichers 8 angeschlossen. Der dritte Eingang ist am zweiten Ausgang der Einheit 9 zur Steuerung des Objekts angeschlossen. Der vierte Eingang ist am dritten Ausgang der Eingangs-Ausgangs-Einheit 11 angeschlossen. Der vierte Ausgang ist am zweiten Eingang der Einheit 9 zur Steuerung des Objekts angeschlossen. Der zweite Eingang der Eingangs-Ausgangs-Einheit 11 ist am ersten Ausgang der Umwandlungseinheit 12 angeschlossen. Der zweite Ausgang ist am ersten Eingang der Umwandlungseinheit 12 angeschlossen. Die Umwandlungseinheit 12 hat außerdem Eingänge und Ausgänge für den Anschluss des Objekts; diese Eingänge sind mit den Sensoren verbunden, und diese Ausgänge sind mit den Stellorganen des Objekts verbunden.

Jeder Adapter erfüllt innerhalb der Zeitscheibe $T_n$ des Zyklus n folgende Operationen:

- bearbeitet die Daten des Objekts $X_{in}$,
- bildet den Befehlsvektor $M_{in}$ für die Stellorgane des Objekts i,
- bildet auf der Basis $M_{in}$ die Daten der Teilregler für andere Objekte (k);
- bildet den Anzeiger der Störung vom Stellorgan j - $N_{jn}$,
- überträgt den Wert der Veränderung der Daten, wenn dieser sich von Null unterscheidet, und den Anzeiger der Störung, die im vorherigen Zyklus (n-1) gebildet sind.

Zur Ausführung dieser Operationen gehören zum Adapter der Empfänger 5 und der Sender 8, die durch eine Rückverbindungskette (weiterhin RV) verbunden sind, die die Übereinstimmung des Senders und des Verbindungskanals gewährleistet, wie beispielsweise in der US 4 745 391, 17.05.1988.

Der Empfänger 5 sondert außer der Datensequenz, die auf die Zerlegungseinheit 7 gelangt, aus dem ankommenden Signal die Synchronisationsmarkierungen des Austauschprozesses M aus und überträgt sie auf den Eingang des Synchronisators 10, der seinerseits die Steuerbefehle der Zerlegungseinheit 7 zuführt. Die Zerlegungseinheit 7, die die Datensequenz vom Empfänger 5 und die Befehle vom Synchronisator 10 empfängt,

- bildet die Eingangszone des Schnittstellenfensters des Hauptspeichers 8, wobei diese die Daten gemäß den Eingangsvektoren der Teilregler $X_{(n-1)ij}$ sortiert,
- bildet die Zone der Ausführungsmaske des Schnittstellenfensters des Hauptspeichers 8,
- bringt auf den Sender 5 die Datensequenz, die dem Ausgangsvektor der Teilregler $Y_{(n-1)}O_{ij}$ sowie dem Vektor der Störungen $N_{j(n-1)}$ aus der Zone des Ausgangs des Schnittstellenfensters des Hauptspeichers 8 entspricht.

Der Synchronisator 10 liest aus der Synchronisationszone des Schnittstellenfensters des Hauptspeichers 8 die Nummer des Adapters 3, den Indikator des Vorhandenseins der Information, die Markierungen der Störungen ab, die im Signal des Ausgangs der Eingangs-Ausgangs-Einheit 11 enthalten sind, lässt sich durch die Markierungen synchronisieren, die vom Empfänger 5 kommen, und erteilt die Befehle hinsichtlich der Austastung der Übertragung auf den Sender 6.

Parallel mit diesem Prozess erfüllt der Synchronisator 10 den Vorgang der Bildung eines laufenden Anzeigers von Störungen, indem er ein Signal über den Ort der Entstehung der Störungen von der Einheit 9 zur Steuerung des Objekts erhält.

Die Einheit 9 zur Steuerung des Objekts erfüllt die Prozeduren sowohl als Regler seines Objekts, als auch als Teilregler anderer Objekte, wie es in der Zone der Ausführungsmaske des Arbeitsfensters angegeben ist, und bildet die Ausgangzone des Arbeitsfensters des Hauptspeichers 8.

Die Eingangs-Ausgangs-Einheit 11 realisiert folgende Prozeduren (Drivers):

- die Ausgabe des Befehlsvektors $M_{in}$ an die Stellorgane des Objekts über die Umwandlungseinheit 12 aus der Eingangs-Ausgangs-Pufferzone des Arbeitsfensters des Hauptspeichers 8,
- die Eingabe und die vorläufige Vorbereitung der Daten von den Sensoren des Objekts, indem die Umwandlungseinheit 12 gesteuert wird und dabei die Daten des Objekts $X_{in}$ in der Pufferzone des Arbeitsfensters des Hauptspeichers 8 gestaltet werden.

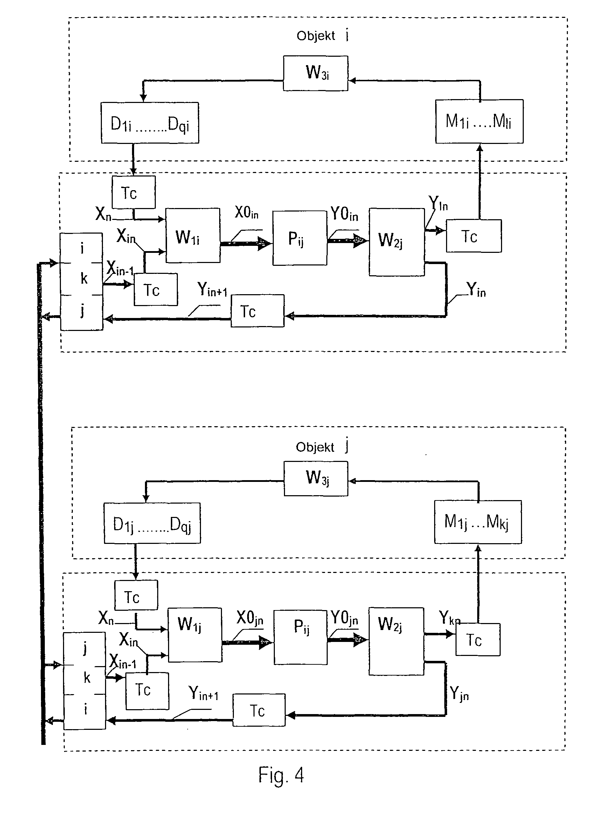

Nach dem Abschluss des Austauschzyklus erteilt der Synchronisator 10 dem Hauptspeicher 8 den Befehl, der die Stellen des Schnittstellen- und Arbeitsfensters des Hauptspeichers 8 wechselt. Der Übersichtsplan der Bildung der Befehle und der Daten ist in Fig. 4 angegeben.

Am Anfang des Zyklus bearbeitet der Adapter die Daten $D_{1jn}$ (wobei j die Nummer des Objekts und n die Nummer des Zyklus der Bearbeitung ist), die von den Sensoren des am Adapter angeschlossenen Objekts kommen.

Nach den Daten, die im vorherigen Zyklus $XO_{in}$ ermittelt worden sind, bildet der Adapter die Daten der Regelungsglieder

$$Y0_{(n+1)} = P_{ij} * XO_{in} \ (DI_{jn}),$$

wobei
$Y0_{(n+1)}$ der Steuervektor,
i die Nummer des Steuervektors,
$P_{ij}$ die Matrix der Übertragungsfunktionen des j-Glieds des i-Stuerglieds,

$P_{ij} = W_{ij(Z)} * TS_{ij(Tc)}$, wobei
$TS_{ij(Tc)}$ eine Diagonalmatrix der Art $(1-e^{-kj*s*Tc}) * e^{-kj*s*Tc}/s$ und
ki die laufende Verzugsmultiplizität der i-Komponente des Vektors $XO_{in}$ ist.

Nach Daten, die im vorherigen Zyklus $XO_{in}$ ermittelt worden sind, bildet der Adapter die Steuereinwirkung auf die Stellorgane seines Objekts

$$SO_{i(n+1)} = WS_{ij}*X0_{in} \ (DI_{jn}),$$

wobei
$WS_{ij}$ die Matrix der Übertragungsfunktionen ihres Knotens nach der Art ist, die $P_{ij}$ analog ist.

Dann sendet der Adapter die Steuersignale $SO_{in}$ auf die Stellorgane seines Objekts und bildet den Anzeiger der Störung $N_{j(n+i)}$ entsprechend der Objektbeschreibung.

Parallel mit den oben dargestellten Handlungen empfängt der Adapter $XO_{in}$ und überträgt $YO_{in}$, der mit $N_{j(n+1)}$ vereinigt ist.

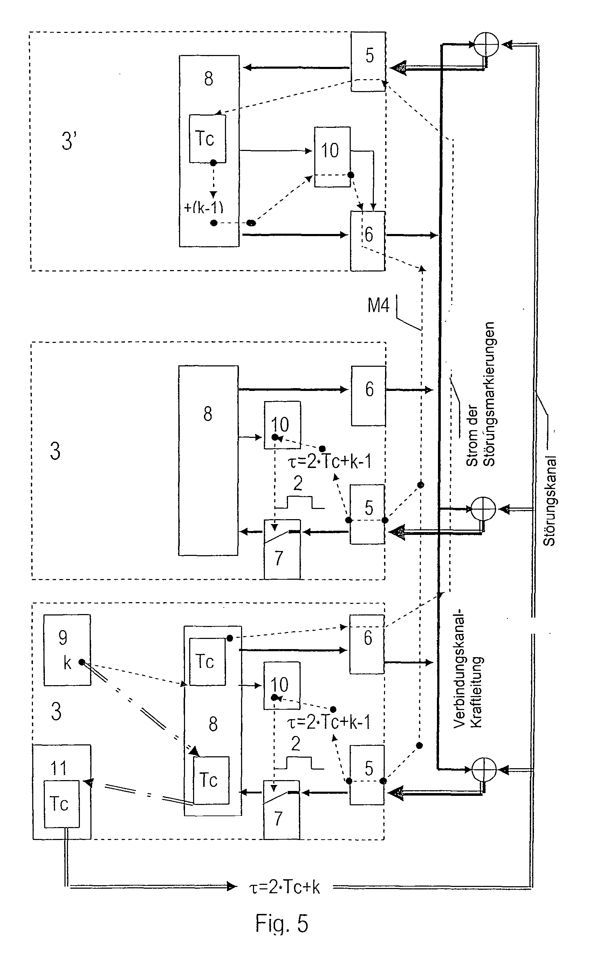

Der Übersichtsplan der Prozedur der Bildung des Übertragungsmoments der Aussetzmarkierung der Takte, die Störungen enthalten, ist in Fig. 5 dargestellt.

Die Einheit 9 zur Steuerung des Objekts des Adapters i, wobei diese den Steuerbefehl für das Stellorgan j bildet, bestimmt die Zeit T ab Beginn des Austauschzyklus bis zur Ausführung des Befehls und platziert den Mechanismus in die Zone der Störungskarte des Hauptspeichers des Adapters.

Das im laufenden Zyklus n gebildete Fragment $N_{in}$ der Störungskarte wird an den Meister im Austauschzyklus n+1 übertragen.

Der gleichzeitig im Zyklus n gebildete Steuerbefehl des Stellorgans des Objekts wird in die Eingabezone des Hauptspeichers übertragen, wird im Zyklus n+1 in die Eingangs-Ausgangs-Pufferzone des Hauptspeichers umgesetzt und wird von der Eingangs-Ausgangs-Einheit im Zyklus n+2 und im Takt $N_{i(n+2)}$ ausgeführt.

Parallel rechnet der Meister mit der Verwendung der ganzen Gesamtheit $N_{i(n+1)}...N_{i(n+1)}...$ die Momente des Entstehens der Störungen aus und arbeitet in den Austauschtakten, die diesen Momenten vorhergehen, die Aussetzmarkierung des Takts im Takt $N_{i(n+2)}$ aus, indem er das Aussetzen des Störungsintervalls sichert.

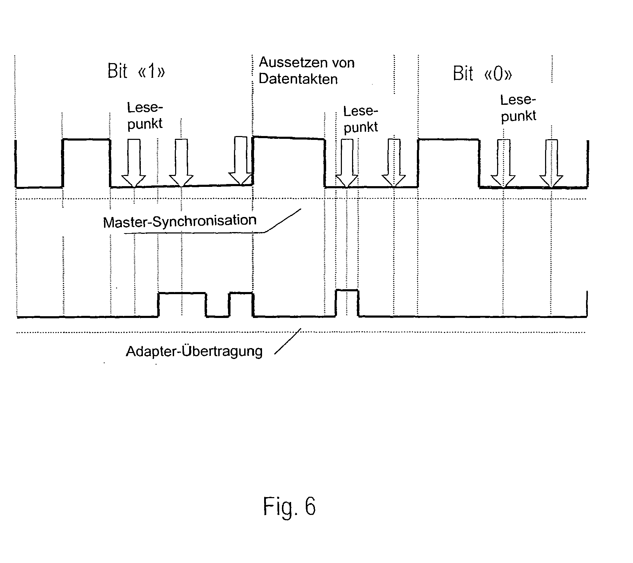

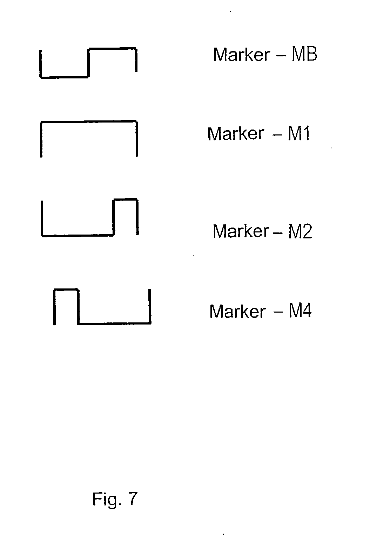

Der Empfang und die Übertragung erfolgt über die Kraftleitung 2 in folgender Weise: das Zeitdiagramm des Austausches ist in Fig. 6 dargestellt, während die Fig. 7 das Zeitdiagramm der Markierungsarten zeigt.

Der Adapter, der an der Starkstromleitung angeschlossen ist (weiterhin im Text Meister genannt), arbeitet die Markierung des Übertragungsbeginns M1 aus und synchronisiert die Übertragung jedes Bits durch die Markierung MB.

Der nächste Adapter gibt entweder die Übertragungsmarkierung M2 aus, überträgt $YO_{in}$, der mit $N_{j(n+1)}$ vereinigt ist, und die Markierung des letzten Bits M3 oder gibt die Aussetzmarkierung des Taktes M4 aus, die die Summe von M2 und M3 ist. Wenn die Markierung des Adapters fehlt, gibt der Meister die Markierung des letzten Bits aus.

Der Adapter mit der Nummer k übernimmt die Daten und speichert sie in den Positionen 1, 2...k-1, k+1,... bis zur nächsten Markierung M1.

Der Adapter mit der Nummer k überträgt beim Erhalten von K-1 von der Markierung M3 die Daten, wie es oben erwähnt ist.

Nachdem die Markierung M4 empfangen worden ist, machen alle Adapter eine Empfangspause für die Dauer von 2 Übertragungstakten.

Im Vergleich zu den bekannten, analogen Einrichtungen, die in der Autoindustrie eingesetzt werden, gewährleistet die Erfindung einen Störpegel von kleiner als - 40dB, und die Übertragungsgeschwindigkeit der Steuerdaten ist 15 mal höher.

**Patentansprüche**

1. Einrichtung zur Steuerung eines Systems aus Objekten, die folgendes aufweist:

   - eine mit einer unabhängigen Stromversorgungsquelle (1) verbundene Kraftleitung (2),
   - Adapter (3), die zwischen der Kraftleitung (2) und Objekten (4) angeschlossen sind und die mit den Objekten (4) Steuerungsglieder bilden und programmierbar ausgeführt sind,

   **dadurch gekennzeichnet,**
   **dass** die Kraftleitung (2) gleichzeitig zur Datenübertragung dient, dass die Adapter (3) mit der Möglichkeit der Berücksichtigung von Störungen ausgeführt sind und dass der zwischen der Kraftleitung (2) und der unabhängigen Stromversorgungsquelle (1) angeordnete Adapter (3) außerdem mit der Möglichkeit der Synchronisierung der Datenübertragung zwischen den restlichen Adaptern unter Berücksichtigung des Moments der Entstehung der Störungen und der Regelung der Stromversorgungsspannung ausgeführt ist.

2. Adapter der Einrichtung zur Steuerung eines Systems aus Objekten, der folgendes aufweist: Empfänger (5), Sender (6), eine Zerlegungseinheit (7), einen Hauptspeicher (8) (RAM), eine Einheit (9) zur Steuerung des Objekts (4), einen Synchronisator (10), eine Eingangs-Ausgangs-Einheit (11) und eine Umwandlungseinheit (12), wobei die Einheit (9) zur Steuerung des Objekts, die Eingangs-Ausgangs-Einheit (11) und die Umwandlungseinheit (12) programmierbar ausgeführt sind, der erste Eingang des Empfängers (5) für den Anschluss an der Kraftleitung (2) vorgesehen, der erste Ausgang am ersten Eingang der Zerlegungseinheit (7) angeschlossen, der zweite Ausgang am ersten Eingang des Synchronisators (10) angeschlossen, der dritte Ausgang am ersten Eingang des Senders (6) angeschlossen, der zweite Eingang des Senders am ersten Ausgang der Zerlegungseinheit (7) angeschlossen, der dritte Eingang am ersten Ausgang des Synchronisators (10) angeschlossen, der Ausgang für den Anschluss an die Kraftleitung (2) vorgesehen, der zweite Eingang der Zerlegungseinheit (7) am ersten Ausgang des Hauptspeichers (8) angeschlossen, der dritte Eingang am zweiten Ausgang des Synchronisators (10) angeschlossen, der erste Eingang der Einheit (9) zur Steuerung des Objekts am vierten Ausgang des Hauptspeichers (8) angeschlossen, der erste Ausgang am vierten Eingang des Hauptspeichers (8) angeschlossen, der erste Eingang des Hauptspeichers (8) am ersten Ausgang der Eingangs-Ausgangs-Einheit angeschlossen, der zweite Eingang am dritten Ausgang des Synchronisators (10) angeschlossen, der dritte Eingang am zweiten Ausgang der Zerlegungseinheit (7) angeschlossen, der dritte Ausgang am ersten Eingang der Eingangs-Ausgangs-Einheit (11) angeschlossen, der zweite Eingang der Eingangs-Ausgangs-Einheit (11) am ersten Ausgang der Umwandlungseinheit (12) angeschlossen und der zweite Ausgang am ersten Eingang der Umwandlungseinheit (12) angeschlossen ist und die Umwandlungseinheit (12) außerdem Eingänge und Ausgänge für den Anschluss am Objekt (4) aufweist,

   **dadurch gekennzeichnet,**

   **dass** der erste Ausgang der Zerlegungseinheit (7) am zweiten Eingang des Empfängers (5) angeschlossen ist, dass der zweite Eingang des Synchronisators (10) am fünften Ausgang des Hauptspeichers (8) angeschlossen ist, dass der dritte Eingang am zweiten Ausgang der Einheit (9) zur Steuerung des Objekts angeschlossen ist, dass der vierte Eingang am dritten Ausgang der Eingangs-Ausgangs-Einheit (11) angeschlossen ist und dass der vierte Ausgang am zweiten Eingang der Einheit (9) zur Steuerung des Objekts angeschlossen ist.

| 1 |
|---|
| unabhängige Stromversorgungs- quelle |

| 3' |
|---|
| Adapter |

| 4 |
|---|
| Objekt |

| 3 |
|---|
| Adapter |

| 4 |
|---|
| Objekt |

| 3 |
|---|
| Adapter |

2

Kraftleitung

Fig.1

Fig. 2

Rückverbindung

6
Sender

5
Empfänger

Adapter m

M

7
Zerlegungseinheit

10
Synchronisator

8
Hauptspeicher

9
Einheit der
Steuerung des
Objekts

11
Eingangs-Ausgangs-
Einheit

Umwandlungseinheit
12

$M_{in}$

$X_{in}$

Stellorgane des
Objekts

Geber (Sensoren)
des Objekts

Wm

von den
anderen
Objekten

Übertragungsfunktion
des Objekts

zu den
anderen
Objekten

Objekt m

Fig. 3

Fig. 4

Fig. 5

Bit «1»     Aussetzen von
            Datentakten                Bit «0»

Lese-                    Lese-                Lese-
punkt                    punkt                punkt

Master-Synchronisation

Adapter-Übertragung

Fig. 6

Marker – MB

Marker – M1

Marker – M2

Marker – M4

Fig. 7

**INTERNATIONAL SEARCH REPORT**

| International application No. |
| --- |
| PCT/RU 2004/000323 |

A.  CLASSIFICATION OF SUBJECT MATTER

G05B 19/418, H04L 12/417

According to International Patent Classification (IPC) or to both national classification and IPC

B.  FIELDS SEARCHED

Minimum documentation searched (classification system followed by classification symbols)

G05B 15/00,15/02,19/00,19/02,19/418,  G08C 19/00,19/12 19/28,  H04B 3/00,3/54,
H04L 12/00,12/28,12/40,12/407,12/413,12/417,

Documentation searched other than minimum documentation to the extent that such documents are included in the fields searched

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | WO 2003/019303 A1 (MAURO, GEORGE) 06. 03. 2003, the abstract, figures 1-3, page 13, section [043] (cited in the description) | 1-2 |
| A | RU 2178951 C1 (MOSKOVSKY GOSUDARSTVENNY AVIATSIONNY INSTITUT ( TEKHNICHESKY UNIVERSITET) et al) 27.01.2002, claim 1 | 1-2 |
| A | WO 1987/004275 A1 (AUDITEL SYSTEMS PTY. LTD.) 16. 07. 1987, the abstract, figure 1 | 1-2 |
| A | US 5222017 A (THE UNIVERSITY OF BRITISH COLUMBIA) 22. 06. 1993, the abstract, figure 1 | 1-2 |
| A | EP 1363175 A1 (SIEMENS AKTIENGESELLSCHAFT) 19. 11. 2003, columns 6-7, section [0022], the drawing | 1-2 |

☐  Further documents are listed in the continuation of Box C.  ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| **24 March 2004 (24.03.2004)** | **31 March 2005 (31.03.2005)** |
| Name and mailing address of the ISA/ | Authorized officer |
| Facsimile No. | Telephone No. |

Form PCT/ISA/210 (second sheet) (July 1992)